# EUROPEAN PATENT APPLICATION

(11) **EP 2 157 554 A1**
(43) Date of publication of application: **24.02.2010**
(21) Application number: 09275063.7
(22) Date of filing: 20.08.2009
(51) Int. Cl.: G07F 17/32

(54) **Interative gaming with mobile phones**

(30) Priority: 20.08.2008 GB 0815151
(71) Applicant: Million21 Limited, Ashton Under Lyne, Manchester OL7 0QQ (GB)
(72) Inventor: Sheffield, Chris, Near Crewe, Cheshire CW12 4TE (GB)
(74) Representative: Wilson Gunn

(57) **Abstract**

A mobile handset 101 operable to play a game of the type wherein prizes may be awarded for predetermined winning outcomes. In order to play for monetary value, the user is obliged to log on to a game server 110. The log on process is implemented by a control unit 111 which is operable in conjunction with a user data store 114 to identify and authenticate the user. Once the user is authenticated, they are logged on to and cleared to use the system for gaming. A location regulator 115 is also provided in the server 110 being operable to verify the location of handset 101 and thus ensure that gaming is only enabled if the handset is located in a territory where it is legal. Accordingly, once the user is authenticated, a location verification process takes place. Since the location verification process is not instantaneous, the user is allowed initial access to the network whilst this takes place. The initial access is controlled by a countdown timer 116 which counts down a countdown period which is set by the game operator. If no verification that the handset location is in a legal territory can be obtained before the countdown timer 116 expires, the user is locket out of the system. A suitable lockout or error message can then be transmitted to the user.

## Description

The present invention relates to interactive gaming accessed via mobile telephones and to a system for implementing the same.

It is known to provide games playable on a mobile telephone. In recent times it has also become possible to provide games playable on a mobile telephone which emulate entertainment machines of the type actuable to play a game for a wager of monetary value and operable to award prizes with monetary value if a predetermined winning outcome occurs. Such games playable for monetary prizes are generally subject to regulation. Furthermore, in many territories play of a particular game or gambling games in general may not be permitted. Maintaining regulatory compliance with fixed location gaming terminals is relatively simple. Mobile phones however may readily cross territorial borders whilst continuing to operate. As such, this might enable play of a prohibited game in a particular territory, potentially rendering the game operator liable to considerable penalties.

It is an object of the present invention to provide a new method of implementing a game of the type wherein prizes may be awarded for predetermined winning outcomes on a remote terminal that at least partially overcomes or alleviates the above problems.

According to a first aspect of the present invention there is provided a method of implementing a game of the type wherein prizes may be awarded for predetermined winning outcomes on a remote terminal comprising the steps of: receiving a log in request; authenticating the user; determining the identity of the network cell the user's terminal is connected to; determining whether the identified cell is located in a predetermined territory and thereby determining whether to enable or terminate gaming operations.

In accordance with a second aspect of the present invention there is provided a system for implementing a game of the type wherein prizes may be awarded for predetermined winning outcomes on a remote terminal, the system comprising: a game server operable to receive a log in request, authenticate the user and subsequently run a game; and a location regulator operable to interrogate the user's network operator to determine the identity of the network cell the user's terminal is connected to; determine whether the identified cell is located in a predetermined territory and thereby determine whether to instruct the game server to enable or terminate gaming operation.

In this way a game can be implemented on a mobile terminal wherein legal compliance can be maintained by terminating gaming operation if the terminal is not located within a predetermined territory. Typically, the predetermined territory is contiguous with a nation, a state or other jurisdictional area for which the game is compliant with local gambling laws.

The location verification process may run after a user has been authenticated. In some embodiments, the authentication process may initiate a countdown timer. The user may thus be able to play the game before verification of user location occurs. This reduces user frustration in the case of delays in establishing user location. If no positive verification of the terminal location is obtained within the countdown period, the user may be locked out of the game. A suitable countdown period may be, say, five minutes. The countdown period may however be varied by the game operator if desired.

The interrogation of the user's network may be under taken directly or indirectly via a third party device or service. Preferably, the interrogation is made via a suitable asynchronous call which generates a response including the cell identity. The call may include information relating to the identity of the user and/or the terminal. The call may further contain a transaction identifier. Preferably, the response also includes the same transaction identifier. This enables the response to be rapidly matched with the call. The calls and responses may be stored in a suitable memory means. This ensures that a record of operator compliance can be maintained.

The terminal location may be determined by performing a look up of the network cell identity with a table containing known cell identities. Alternatively, the location may be determined by matching the properties of the network cell identity against known properties of network cell identities in territories where play of the game is permitted. For example, this could involve checking that the network cell identity contains a particular number of digits and/or specific prefix. For example, UK cell identities are 12 digits in length and contain the prefix 447.

If the terminal location is determined to lie outside the predetermined territory more than a threshold number of times in a first predetermined period, the user may be locked out for a second predetermined period. The terminal location threshold and both predetermined periods may be freely adjusted by the game operator.

The game server may store user data. The data may include data necessary to identify and authenticate the user. The data may also include ongoing data relating to the user's account including credit data. The data may further include a record of the user's prior behaviour with respect to log on attempts from outside the predetermined territory. In particular, different users may have different period and/or thresholds dependent upon prior behaviour. Similarly, some users may have an increased or reduced countdown period in response to prior behaviour.

The terminal may be any suitable mobile terminal. Typically, the terminal is a mobile telephone or a PDA (personal digital assistant).

In order that the invention is more clearly understood, one embodiment will be described in detail, by way of example only, with reference to the accompanying drawings in which:

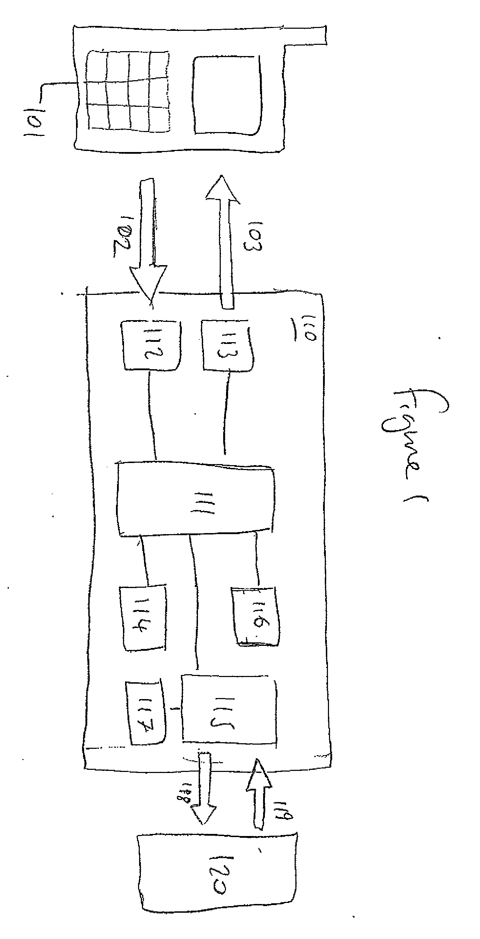

- Figure 1: is a schematic diagram of a system for the implementation of a game on a remote terminal in accordance with the present invention.

In the present invention, a user has a mobile handset 101 operable to play a game of the type wherein prizes may be awarded for predetermined winning outcomes. In order to play for monetary value, the user is obliged to log on to a game server 100. The log on process and the verification of payment or credit in the event of a winning outcome may require the exchange of data 102, 103 via an active network connection (typically, GSM, GPRS, UMTS or similar). The server 110 is provided with suitable data receiving 102 and data transmitting means (which may be combined transceiver means in alternative embodiments). The log on process is implemented by a control unit 111 which is operable in conjunction with a user data store 114 to identify and authenticate the user.

Once the user is authenticated, they are logged on to and cleared to use the system for gaming. In the present invention however, a location regulator 115 is also provided in the server 110. The location regulator is operable to verify the location of handset 101 and thus ensure that gaming is only enabled if the handset is located in a territory where it is legal. Accordingly, once the user is authenticated, a location verification process takes place. Since the location verification process is not instantaneous, the user is allowed initial access to the network whilst this takes place. The initial access is controlled by a countdown timer 116 which counts down a countdown period which is set by the game operator. If no verification that the handset location is in a legal territory can be obtained before the countdown timer 116 expires, the user is locket out of the system. A suitable lockout or error message can then be transmitted to the user.

The location verification process comprises interrogating the user's network operator 120. Typically this would involve placing an asynchronous call 118 to the user's network operator 120 either directly as shown in figure 1 or indirectly via an external device or service provider. The asynchronous call contains the user identification details such as mobile number, SIM number or handset serial number and a transaction identity number. A copy of call 118 is stored in transaction log 117.

Following the call 118 a response 119 will subsequently be generated by the network operator 120, the response 119 including the transaction identity number and the network cell identity number. As the response 119 includes the transaction identity number, this enables the response 119 to be rapidly matched with the call 118 when performing a look up on the transaction log 117.

Once the call 118 and response 119 are matched, the location regulator 115 determines whether the network cell identity indicates that the handset 101 is in a permitted territory. This can be achieved either by looking up the location of the network cell identity or more quickly be analysing the properties of the network cell identity to see whether they match known properties of network cell identities within the territory. For instance, all UK calls have an identity consisting of 12 digits with the prefix 447.

If the network cell identity shows that the handset is within the permitted territory, game play is allowed to continue. If the network cell identity shows that the handset is not within the permitted territory, the user is locked out of the system. A suitable lockout or error message can then be transmitted to the user. The result of the location verification process may be stored in the transaction log 117 alongside the call 118 and response 119. This provides a useful log showing compliance by the gaming operator.

Occasions when the user has been locked out may be stored in the user data store 114. This can be used to lock out users based on their past behaviour without the necessity for location verification. For instance, a user may be automatically locked out for a predetermined time period if they fail the location verification on a predetermined (consecutive or nan-consecutive) number of occasions within a particular period. This reduces the workload on the location verification process.

It is of course to be understood that the invention is not intended to be limited to the details of the above embodiments which are described by way of example only.

## Claims

1. A method of implementing a game of the type wherein prizes may be awarded for predetermined winning outcomes on a remote terminal comprising the steps of: receiving a log in request; authenticating the user; determining the identity of the network cell the user's terminal is connected to; determining whether the identified cell is located in a predetermined territory and thereby determining whether to enable or terminate gaming operations.

2. A method as claimed in claim 1 wherein the user is able to play the game before verification of user location occurs.

3. A method as claimed in claim 1 or claim 2 wherein the location verification process is run after a user has been authenticated.

4. A method as claimed in claim 1 wherein the authentication process initiates a countdown timer and wherein if no positive verification of the terminal location is obtained within the countdown period, the user is locked out of the game.

5. A method as claimed in claim 4 wherein the countdown period is variable by the game operator.

6. A method as claimed in any preceding claim wherein the interrogation of the user's network is undertaken directly or indirectly via a third party device or service.

7. A method as claimed in any preceding claim wherein the interrogation is made via a suitable asynchronous call which generates a response including the cell identity.

8. A method as claimed in claim 7 wherein the call includes information relating to the identity of the user and/or the terminal.

9. A method as claimed in claim 7 or claim 8 wherein the call further contains a transaction identifier and the response also includes the same transaction identifier.

10. A method as claimed in any one of claims 7 to 9 wherein the calls and responses are stored in a suitable memory means.

11. A method as claimed in any preceding claim wherein the terminal location is determined by performing a look up of the network cell identity with a table containing known cell identities or is determined by matching the properties of the network cell identity against known properties of network cell identities in territories where play of the game is permitted.

12. A method as claimed in any preceding claim wherein if the terminal location is determined to lie outside the predetermined territory more than a threshold number of times in a first predetermined period, the user is locked out for a second predetermined period.

13. A method as claimed in claim 12 wherein the terminal location threshold and both predetermined periods are freely adjustable by the game operator.

14. A method as claimed in claim 13 wherein different users have different period and/or thresholds dependent upon prior behaviour and wherein some users have an increased or reduced countdown period in response to prior behaviour.

15. A system for implementing a game of the type wherein prizes may be awarded for predetermined winning outcomes on a remote terminal, the system comprising: a game server operable to receive a log in request, authenticate the user and subsequently run a game; and a location regulator operable to interrogate the user's network operator to determine the identity of the network cell the user's terminal is connected to; determine whether the identified cell is located in a predetermined territory and thereby determine whether to instruct the game server to enable or terminate gaming operation.

16. A system as claimed in claim 15 wherein the game server stores user data, the data including any of the following: data necessary to identify and authenticate the user, ongoing data relating to the user's account including credit data, a record of the user's prior behaviour with respect to log on attempts from outside the predetermined territory.

17. A system as claimed in claim 16 or claim 17 wherein the terminal is a mobile telephone or a PDA (personal digital assistant).
